# EUROPÄISCHE PATENTANMELDUNG

(11) **EP 2 560 264 A2**
(43) Veröffentlichungstag der Anmeldung: **20.02.2013**
(21) Anmeldenummer: 12173563.3
(22) Anmeldetag: 26.06.2012
(51) Int. Cl.: H02J 7/00

(54) **Energiespeicher mit mindestens einem Basismodul**

(30) Priorität: 14.12.2011 DE 102011056377; 08.07.2011 DE 102011107500
(71) Anmelder: Mack Electronic Systems GmbH & Co. KG, 72766 Reutlingen (DE)
(72) Erfinder: Mack, Helmut, 72805 Lichtenstein (DE)
(74) Vertreter: Kohler Schmid Möbus

(57) **Zusammenfassung**

Ein Energiespeicher mit mindestens einem Basismodul (BM), das mehrere parallel zueinander geschaltete Stränge (11 - 14) mit mehreren in Serie geschalteten Batteriezellen (15) aufweist, wobei die Batteriezellen (15) während der Abgabe von Strom an einen lokalen Verbraucher (36) oder ein Stromnetz (40) gleichzeitig durch einen lokalen Energieerzeuger (34) oder das Stromnetz (40) aufladbar sind.

## Beschreibung

Die Erfindung betrifft einen Energiespeicher mit mindestens einem Basismodul, das mehrere parallel zueinander geschaltete Stränge mit mehreren in Serie geschalteten Batteriezellen aufweist, wobei das Basismodul mit dem Stromnetz und mit mindestens einem lokalen elektrischen Energieerzeuger verbunden ist.

Elektrische Energie wird heutzutage zunehmend auch dezentral von kleinen Erzeugern, beispielsweise durch Photovoltaik-Anlagen auf den Dächern von Wohn- und Fabrikgebäuden erzeugt. Die erzeugte Energie wird teilweise ohne Zwischenspeicherung direkt in das öffentliche Stromnetz abgegeben, wodurch es dort teilweise zu einem Überangebot an Strom kommt. In anderen Fällen, insbesondere für so genannte Insellösungen, bei denen der Stromerzeuger den erzeugten Strom selbst verbraucht, sind Akkumulatoren im Einsatz, die die erzeugte Energie zwischenspeichern, sofern der Strom nicht unmittelbar verbraucht werden kann. Reicht der selbst erzeugte Strom nicht aus, so kann der lokale Erzeuger nach wie vor Strom aus dem öffentlichen Stromnetz beziehen.

Aus der DE 10 2009 040 090 A1 ist auch bereits ein Energiespeicher bekannt, der sowohl aus dem öffentlichen Stromnetz geladen werden kann als auch an das öffentliche Stromnetz Strom abgeben kann.

Die in den bisher bekannten lokalen Energiemanagementsystemen eingesetzten Energiespeicher erlauben jedoch kein kontinuierliches Anbieten von gespeichertem Strom an das Stromnetz abhängig vom Ladezustand des Energiespeichers.

Der vorliegenden Erfindung liegt daher die Aufgabe zugrunde, einen Energiespeicher bereitzustellen, der der Zwischenspeicherung von lokal erzeugter elektrischer Energie, vorzugsweise aus regenerativen Energiequellen, dient und gleichzeitig kontinuierlich lokal nicht verbrauchten Strom dem öffentlichen Stromnetz zuführen kann.

Die Aufgabe wird gelöst durch einen Energiespeicher mit mindestens einem Basismodul, das mehrere parallel zueinander geschaltete Stränge mit mehreren in Serie geschalteten Batteriezellen aufweist, wobei das Basismodul mit dem Stromnetz und mit mindestens einem lokalen elektrischen Energieerzeuger verbunden ist, der dadurch gekennzeichnet ist, dass die Batteriezellen des Basismoduls während der Abgabe von Strom an das Stromnetz und/oder an einen lokalen Verbraucher gleichzeitig durch den Energieerzeuger und/oder das Stromnetz aufladbar sind.

Mit diesem Energiespeicher ist es möglich, lokal erzeugten Strom nicht erst zeitlich versetzt, sondern während des Entstehens in das öffentliche Stromnetz einzuspeisen, sofern der Strom nicht lokal verbraucht wird. In diesem Betriebszustand muss der Energiespeicher nicht wie bekannte Energiespeicher überbrückt werden, d. h. die lokal erzeugte Energie direkt in das Stromnetz eingespeist werden, sondern während des Aufladens des Energiespeichers kann gleichzeitig Strom an das Stromnetz abgegeben werden. Dadurch kann sämtliche in den Energiespeicher eingeführte Energie auch wieder genutzt werden. Es kommt nicht zum allmählichen Entladen des Energiespeichers ohne angeschlossenen Verbraucher, wie es bei den bisher bekannten Systemen der Fall ist.

Die Batteriezellen können vorzugsweise Lithium-Ionen-Batteriezellen sein. Es lassen sich jedoch auch andere Batterietypen, beispielsweise Blei-, Nickel-, Cadmium-, NiMH-Batterien oder andere einsetzen. Grundsätzlich ist es auch möglich, unterschiedliche Batterie-Technologien in dem Energiespeicher zu kombinieren. Lithium-Ionen-Batterien zeichnen sich jedoch durch eine sehr hohe Konstanz der Kapazität bei bis zu 20.000 Ladezyklen aus.

Vorzugsweise kann die Ladung und Entladung der Batteriezellen jedes Stranges über getrennte Stromkreise erfolgen. Der Energiespeicher hat somit zwei Schnittstellen nach außen, wobei über eine der Schnittstellen der Ladestrom zugeführt wird, während die andere Schnittstelle der Abgabe von Strom dient.

Weiter kann vorzugsweise jedes Basismodul eine Kontrolleinheit aufweisen, mit der die Stromabgabe sowie die Aufladung der Batteriezellen steuerbar und kontrollierbar ist. Sind mehrere Basismodul vorhanden, so können die Kontrolleinheiten der einzelnen Module zweckmäßigerweise untereinander verbunden sein. Dies erlaubt die bidirektionale Kommunikation aller Parameter und somit eine Gesamtbewertung des Systems.

Weiter ist es von Vorteil, wenn am Ausgang jedes Stranges Dioden vorgesehen sind. Diese sorgen dafür, dass es zu keinen Ausgleichsströmen zwischen den parallel geschalteten Strängen kommt, sofern diese einen unterschiedlichen Ladezustand aufweisen. Durch die Dioden sind die einzelnen Stränge gegeneinander entkoppelt und damit rückwirkungsfrei.

Alternativ zu den Dioden können am Ausgang jedes Stranges Schalter vorgesehen sein, die wechselseitig schließbar sind. Durch diese, vorzugsweise mit der Kontrolleinheit verbundenen Schalter können die Stränge nacheinander entladen werden. Ausgleichsströme zwischen den Strängen werden auch hier vermieden, da stets nur ein Schalter geschlossen ist.

Am Ende der Entladestromkreise der Stränge kann vorzugsweise ein Strombegrenzer angeordnet sein, mit dessen Hilfe die Stromabgabe geregelt werden kann. Dadurch kann eine zu schnelle Entladung der Batteriezellen verhindert und die Lebenszeit der Batteriezellen optimiert werden.

Weiterhin können auch vor jedem Strang in den Ladestromkreisen Strombegrenzer angeordnet sein, die durch Begrenzung des Ladestroms eine Überladung der Batteriezellen und dadurch auch eine Explosion des gesamten Energiespeichers aufgrund von Überhitzung sicher verhindern. Die Strombegrenzer können dabei vorzugsweise durch Gleichspannungswandler gebildet sein. Durch Verbinden der Strombegrenzer mit der Kontrolleinheit lassen sich die Lade- und Entladeströme den jeweiligen Erfordernissen anpassen. Insbesondere kann dadurch dafür gesorgt werden, dass durch eine entsprechende Steuerung der Ladung der Batteriezellen alle parallel geschalteten Stränge möglichst auf den gleichen Ladezustand gebracht werden. Außerdem können die Stromstärken so geregelt werden, dass die höchstmögliche Lebensdauer der einzelnen Batteriezellen erreicht wird. Dazu ist es von Vorteil, wenn Messeinrichtungen zur Erfassung der Spannung jeder Batteriezelle und der Temperatur jedes Stranges vorgesehen sind. Werden diese Messeinrichtungen mit der Kontrolleinheit verbunden, so lassen sich die Lade- und Entladevorgänge der Batteriezellen noch präziser steuern. Außerdem können kritische Betriebszustände vermieden werden.

Als weitere Sicherheitsmaßnahme können in jedem Strang Sicherungen vorgesehen sein, die bei Übertemperatur sowohl einen Lade- als auch einen Entladestromfluss durch den Strang unterbrechen. Diese Sicherungen sprechen automatisch an und sind somit auch wirksam, wenn die Kontrolleinheit ausfallen sollte.

Bei einer bevorzugten Ausgestaltung des Energiespeichers können durch die Kontrolleinheit und die Strombegrenzer in den Ladestromkreisen alle Stränge in den gleichen Ladezustand bringbar sein, d. h. nivelliert werden. Eventuell vorhandene Streuungen der Batteriezellen innerhalb eines Stranges können dadurch ausgeglichen werden. Sind alle Stränge ungefähr auf dem gleichen Ladungsniveau, so ist die erreichbare Gesamtlebensdauer des Energiespeichers maximal.

Der Ausgang des mindestens einen Basismoduls kann über einen Wechselrichter mit dem Stromnetz und/oder mit lokalen Verbrauchern verbunden sein. Selbstverständlich können auch Gleichstromverbraucher ohne die Zwischenschaltung eines Wechselrichters an den Energiespeicher angeschlossen werden.

Insbesondere bei größeren lokalen Energieerzeugern ist es weiter von Vorteil, wenn mehrere Basismodule vorgesehen sind, die über einen internen Bus mit einer zentralen Kontrolleinheit verbunden sind. Die zentrale Kontrolleinheit sorgt dafür, dass alle Basismodule gleichmäßig beladen und bei Abgabe von Strom auch gleichzeitig entladen werden.

Der Eingang des mindestens einen Basismoduls kann über einen Gleichrichter mit dem Stromnetz verbunden sein, sodass eine Ladung der Stränge des Basismoduls über das Stromnetz möglich ist. Gleichzeitig kann eine Ladung der Batteriezellen durch einen lokalen Stromerzeuger, beispielsweise einer Photovoltaik-Anlage, einer Windkraftanlage, etc. erfolgen.

Die zentrale Kontrolleinheit kann mit den Spannungswandlern am Ein- und Ausgang der Basismodule verbunden sein. Hierdurch ist der Netzzugang des gesamten Energiespeichers kontrollierbar.

Dabei ist es von Vorteil, wenn zwischen den Spannungswandlern und der zentralen Kontrolleinheit eine Sicherheitsinstanz eingeschaltet ist, um unerwünschte Verbindungen oder chaotische Anfragen (Plausibilitätsabfrage) zum Stromnetz zu unterbinden.

Die zentrale Kontrolleinheit kann beispielsweise von einem Rechner gebildet werden, der über ein Display und eine Tastatur verfügt. Auf diese Weise lässt sich der Netzzugang auch programmieren. Weiterhin ist es möglich, die zentrale Kontrolleinheit mit der Steuerzentrale einer intelligenten Stromnetzverwaltung (Smart-Grid) zu verbinden. Ein so genanntes Smart-Grid integriert sämtliche Akteure auf dem Strommarkt und generiert durch das Zusammenspiel von Erzeugung, Speicherung, Netzmanagement und Verbrauch ein Gesamtsystem. Der Transfer von Strom in das öffentliche Netz kann von den Kontrollsystemen so gesteuert werden, dass Netzüberlastungen vermieden werden, indem nur solange Strom transferiert wird, solange die erforderliche Netzstabilität gesichert ist. Andernfalls kann der erzeugte Strom erfindungsgemäß gespeichert werden.

Nachfolgend werden bevorzugte Ausgestaltungen eines erfindungsgemäßen Energiespeichers im Zusammenwirken mit dem Stromnetz sowie lokalen Energieerzeugern und lokalen Energieverbrauchern anhand der beigefügten Zeichnung näher beschrieben.

Es zeigen :
- Fig. 1: ein Blockschaltbild eines ersten Energiespeichers;
- Fig. 2: ein Blockschaltbild eines zweiten Energiespeichers.

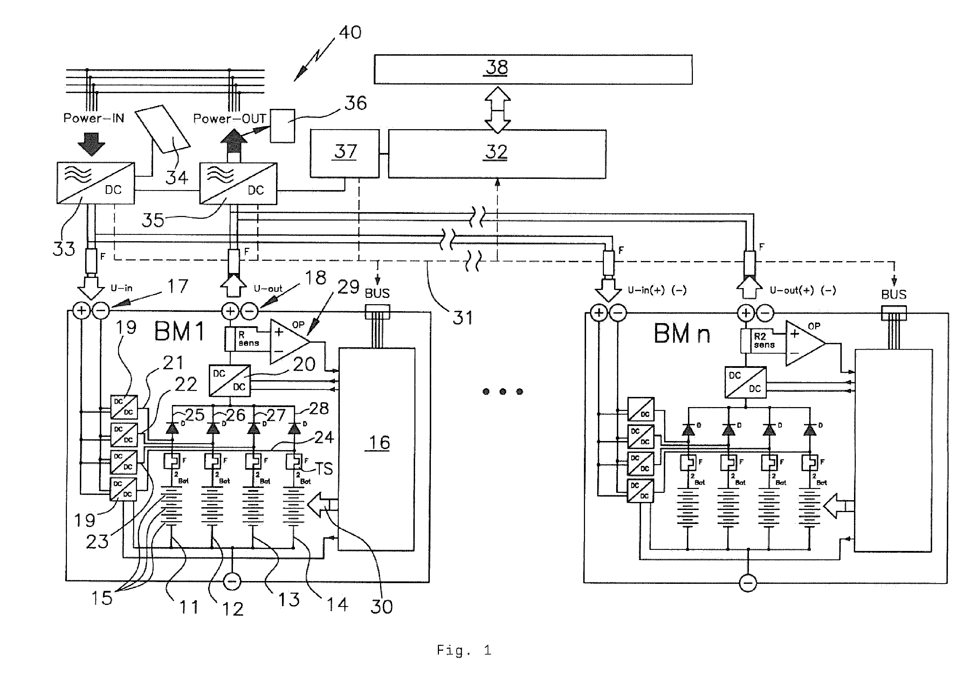

Der Energiespeicher aus Fig. 1 setzt sich aus n/Basismodulen BMI - BMn zusammen. Jedes Basismodul verfügt, wie anhand des Basismodul BM1 beispielhaft dargestellt, über vier Stränge 11, 12, 13, 14, die jeweils mehrere in Serie geschaltete Batteriezellen 15 aufweisen. Außerdem ist in jedem Basismodul BM eine Kontrolleinheit 16 vorgesehen, die das Laden und Entladen des Basismoduls BM steuert. Das Laden der Batteriezellen 15 sowie das Entladen derselben können gleichzeitig erfolgen. Dazu weist das Basismodul BM1 für jeden Strang 11 - 14 einen Ladestromkreis 21 - 24 und einen Entladestromkreis 25 - 28 auf. Die Ladestromkreise 21 - 24 werden über den Eingang 17 gespeist. Die Entladestromkreise 25 - 28 geben ihren Strom am Ausgang 18 ab. Zur Vermeidung von Ausgleichsströmen zwischen den Strängen 11 - 14 sind in den Entladestromkreisen für jeden Strang Dioden D vorgesehen. Außerdem weist jeder Strang 11 - 14 eine Temperatursicherung TS auf, die unabhängig von der Kontrolleinheit 16 jeden Stromfluss durch die Batteriezellen 15 bei Überschreiten einer Grenztemperatur unterbindet.

In den Ladestromkreisen 21 - 24 sind jeweils Strombegrenzer 19 für die Ladeströme vorgesehen. Auch den Dioden D nachgeschaltet ist ein Strombegrenzer 20 für den Ausgangsstrom angeordnet. Alle Strombegrenzer sind im dargestellten Beispiel als Gleichspannungswandler ausgebildet. Dem Ausgang 18 des Basismoduls BM1 ist außerdem eine Strommessschaltung 29 vorgeschaltet, die eine Kontrolle des abgegebenen Maximalstroms durch die Kontrolleinheit 16 erlaubt. Durch einen Pfeil 30 sind Messeinrichtungen zur Überwachung der Spannung jeder einzelnen Batteriezelle 15 sowie der Temperatur in den Strängen 11 - 14 angedeutet. Diese Messeinrichtungen 30 sind ebenso wie die Strombegrenzer 19, 20 mit der Kontrolleinheit 16 verbunden. Dadurch ist es möglich, über die Kontrolleinheit 16 das Laden der Stränge 11 - 14 so zu steuern, dass jeder der Stränge 11 - 14 den gleichen Ladezustand aufweist. Streuungen der einzelnen Batteriezellen 15 in den verschiedenen Strängen 11-14 können dadurch ausgeglichen werden. Die n/Basismodule BM1 - BMn sind über einen Bus 31 untereinander sowie mit einer zentralen Kontrolleinheit 32 verbunden. Die zentrale Kontrolleinheit 32 steuert sowohl die Stromentnahme aus dem öffentlichen Stromnetz 40 über einen Gleichrichter 33, das Laden der Basismodule BM1 - BMn über lokale Energieerzeuger 34, beispielsweise einer Photovoltaik-Anlage, sowie die Abgabe von Strom über einen Wechselrichter 35 an das öffentliche Netz 40 sowie die Versorgung lokaler Verbraucher 36. Dazu ist zwischen die zentrale Kontrolleinheit 32 und den Gleichrichter 33 sowie den Wechselrichter 35 eine Sicherheitseinrichtung 37 geschaltet, die die Verbindung mit dem öffentlichen Stromnetz 40 nur erlaubt, falls der Betriebszustand des Energiespeichers fehlerfrei ist. Die zentrale Kontrolleinheit 32 kann mit einem Smart-Grid-Verwattungssystem 38 kommunizieren. Über dieses System 38 können lokale Energieprovider ihren Strom dem Batterie besitzenden Endverbraucher anbieten, oder bei Strombedarf von diesem Endverbraucher Strom anfordern und abrufen.

Insgesamt trägt daher der erfindungsgemäße Energiespeicher dazu bei, in Zukunft zumindest einen Teil der Kraftwerke durch eine Vielzahl kleiner Energieerzeuger, die ihre Energie vorzugsweise regenerativ erzeugen, ersetzen zu können.

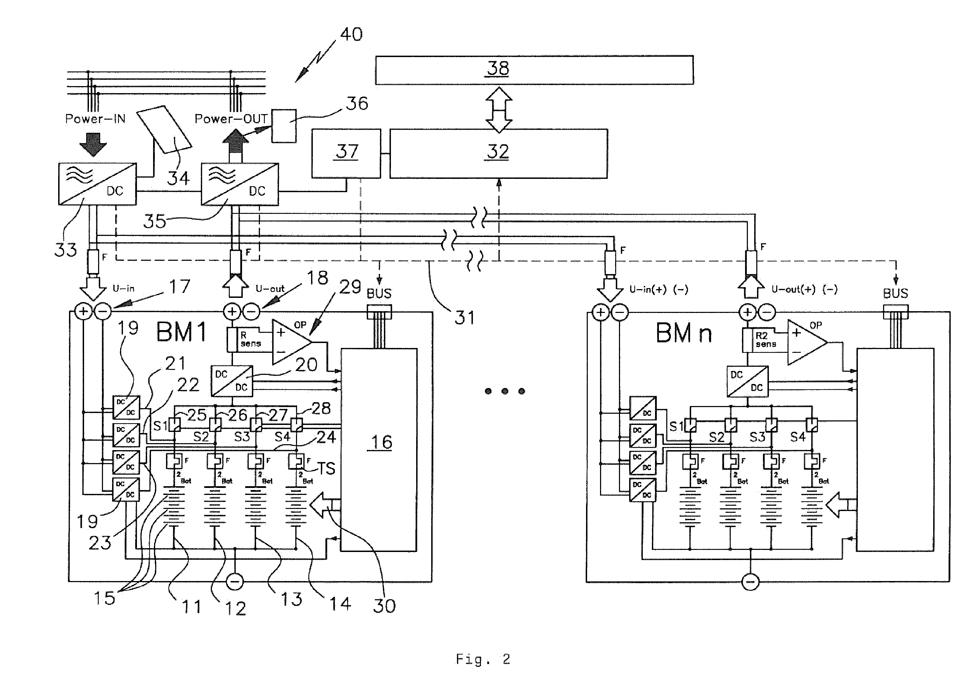

Der in Fig. 2 gezeigte Energiespeicher entspricht weitgehend demjenigen aus Fig. 1. Allerdings sind in den Entladestromkreisen 25 bis 28 der Basismodule jetzt Schalter S1 bis S4 anstelle der Dioden D vorgesehen. Die Schalter S1 bis S4 sind mit der Kontrolleinheit 16 verbunden und werden so angesteuert, dass sobald ein Strang 11 bis 14 entladen ist, der Schalter dieses Stranges geöffnet und der Schalter eines der anderen Stränge 11 bis 14 geschlossen wird. Da stets nur einer der Schalter S1 bis S4 geschlossen ist, werden auch hier Ausgleichsströme zwischen den Strängen 11 bis 14 sicher vermieden. Die Kontrolle des Ladezustandes der einzelnen Stränge 11 bis 14 erfolgt in gleicher Weise wie beim Energiespeicher in Fig. 1. Der Vorteil der Ausgestaltung nach Fig. 2 liegt darinμ dass die Schalter leistungsärmer als Dioden sind und somit mehr Leistung für die Verbraucher zur Verfügung steht.

## Patentansprüche

1. Energiespeicher mit mindestens einem Basismodul (BN), das mehrere parallel zueinander geschaltete Stränge (11 - 14) mit mehreren in Serie geschalteten Batteriezellen (15) aufweist, wobei das Basismodul (BM) mit dem Stromnetz (40) und mit mindestens einem lokalen elektrischen Energieerzeuger (34) verbunden ist, **dadurch gekennzeichnet, dass** die Batteriezellen (15) des Basismoduls (BM) während der Abgabe von Strom an das Stromnetz (40) und/oder an lokale Verbraucher (36) gleichzeitig durch den Energieerzeuger (34) und/oder das Stromnetz (40) aufladbar sind.

2. Energiespeicher nach Anspruch 1, **dadurch gekennzeichnet, dass** die Ladung und Entladung der Batteriezellen (15) jedes Stranges (11 bis 14) über getrennte Stromkreise (21 - 24; 25 - 28) erfolgt.

3. Energiespeicher nach Anspruch 1 oder 2, **dadurch gekennzeichnet, dass** jedes Basismodul (BM1 - BMn) eine Kontrolleinheit (16) aufweist, mit der die Stromabgabe und die Aufladung der Batteriezellen (15) steuerbar ist.

4. Energiespeicher nach einem der Ansprüche 1-3, **dadurch gekennzeichnet, dass** am Ausgang jedes Stranges (11 - 14) Dioden (D) angeordnet sind, die Ausgleichsströme zwischen den parallel geschalteten Strängen (11 - 14) verhindern.

5. Energiespeicher nach einem der Ansprüche 1 bis 3, **dadurch gekennzeichnet, dass** am Ausgang jedes Stranges (11 bis 14) Schalter (S1 bis S4) angeordnet sind, die im Wechsel schließbar sind.

6. Energiespeicher nach einem der Ansprüche 2 - 5, **dadurch gekennzeichnet, dass** am Ende der Entladestromkreise (25 - 28) der Stränge (11 - 14) ein Strombegrenzer (20) angeordnet ist.

7. Energiespeicher nach einem der Ansprüche 2 - 6, **dadurch gekennzeichnet, dass** vor jedem Strang (11 - 14) in den Ladestromkreisen (21 - 24) Strombegrenzer (19) angeordnet sind.

8. Energiespeicher nach Anspruch 6 oder 7, **dadurch gekennzeichnet, dass** die Strombegrenzer (19, 20) Gleichspannungswandler sind.

9. Energiespeicher nach einem der Ansprüche 6-8, **dadurch gekennzeichnet, dass** die Strombegrenzer (19, 20) mit der Kontrolleinheit (16) verbunden sind.

10. Energiespeicher nach einem der Ansprüche 1 - 9, **dadurch gekennzeichnet, dass** Messeinrichtungen (30) zur Erfassung der Spannung jeder Batteriezelle (15) und der Temperatur jedes Stranges (11 - 14) vorgesehen sind.

11. Energiespeicher nach Anspruch 10, **dadurch gekennzeichnet, dass** die Messeinrichtungen (30) mit der Kontrolleinheit (16) verbunden sind.

12. Energiespeicher nach einem der Ansprüche 1 - 11, **dadurch gekennzeichnet, dass** in jedem Strang (11 - 14) Sicherungen (TS) vorgesehen sind, die sowohl einen Lade- als auch einen Entladestromfluss durch den Strang (11 - 14) bei Übertemperatur unterbrechen.

13. Energiespeicher nach einem der Ansprüche 3 bis 12, **dadurch gekennzeichnet, dass** durch die Kontrolleinheit (16) und die Strombegrenzer (19, 20) in den Ladestromkreisen (11 - 14) alle Stränge (11 - 14) in den gleichen Ladezustand bringbar sind.

14. Energiespeicher nach einem der Ansprüche 1 bis 13, **dadurch gekennzeichnet, dass** der Ausgang (18) des mindestens einen Basismodul (BM1 - BMn) über einen Wechselrichter (35) mit dem Stromnetz (40) und/oder einen lokalen Verbraucher (36) verbindbar ist.

15. Energiespeicher nach einem der Ansprüche 1 bis 14, **dadurch gekennzeichnet, dass** der Eingang (17) des mindestens einen Basismoduls (BM1 - BMn) über einen Gleichrichter (33) mit dem Stromnetz (40) verbindbar ist.

16. Energiespeicher nach einem der Ansprüche 1 bis 15, **dadurch gekennzeichnet, dass** mehrere Basismodule (BM1 - BMn) vorgesehen sind, die über einen internen Bus (31) mit einer zentralen Kontrolleinheit (32) verbunden sind.

17. Energiespeicher nach Anspruch 16, **dadurch gekennzeichnet, dass** die zentrale Kontrolleinheit (32) mit den Spannungswandlern (33, 35) am Ein- und Ausgang (17, 18) des mindestens einen Basismodul (BM1 - BMn) verbunden ist.

18. Energiespeicher nach Anspruch 16 oder 17, **dadurch gekennzeichnet, dass** die zentrale Kontrolleinheit (32) mit der Steuerzentrale (38) einer intelligenten Stromnetzverwaltung (Smart-Grid) verbindbar ist.
